# EUROPEAN PATENT APPLICATION

(11) **EP 4 769 219 A1**
(43) Date of publication of application: **01.07.2026**
(21) Application number: 24223813.7
(22) Date of filing: 31.12.2024
(51) Int. Cl.: G06N 3/045, G06N 3/0495, G06N 3/08

(54) **DEVICE AND SYSTEM FOR EDITING TRAINED AI MODELS**

(71) Applicant: Multiverse Computing S.L., Gipuzkoa (ES)
(72) Inventor: Orús, Román, 20014 Donostia-San Sebastián (ES); Cifuentes Hernández, Rodrigo, 20014 Donostia-San Sebastián (ES)

(57) **Abstract**

A device for editing large language models and multimodal Al models and the device includes at least one memory medium that stores the data and/or dataset of the model, at least one control unit that configured to processing the data within modules and according to requests and pre-defined configuration parameters from at least one user and/or client which communicates with the device with at least one communication unit to provide at least one output based on an input data; and is runs the instruction on the trained Al model; and the device comprises compression module, at least one lobotomization module and at least one inception module and at least one of the modules configured to identifying layers of the trained model with the weight matrices; and decomposing the weight matrices of the trained model into a tensor network structure; and at least one integration module that provides connection and data transfer between external systems and platforms and the device.

## Description

### CROSS-REFERENCE TO RELATED APPLICATIONS

None.

### TECHNICAL FIELD OF THE INVENTION

The disclosure relates to device, and system for improving the control and modification of generative artificial intelligence models. Specifically, the disclosure pertains to an editor capable of adjusting weight and bias parameters within large language models (LLMs) and multimodal AI models

Specifically, but without limitation, the disclosure pertains to an editing method and device that capable of adjusting weight and bias parameters, performing model profiling, compression, lobotomization, inception and integrity detection within large language models (LLMs) and multimodal AI models to improve control, adaptability, and efficiency.

### BACKGROUND OF THE INVENTION

In recent years, the field of artificial intelligence has experienced rapid advancements, particularly in the development of large language models (LLMs) and multimodal models. These models have demonstrated significant capabilities in generating human-like text, comprehending complex queries, and integrating information from diverse data sources. Despite these advancements, the increasing complexity and scale of such models have introduced challenges in trained models. Furthermore, the dynamic nature of information and the need for models to continuously adapt to new data and evolving requirements highlight additional concerns. Existing methods, such as prompt engineering and fine-tuning, provide only limited solutions, as they do not enable fine-grained control over the model's internal parameters. Consequently, inefficiencies in model customization arise, alongside increased risks of data privacy violations and reduced accuracy for specialized tasks.

In state of the art, data injection is used in AI models for building, improving, and fine-tuning AI models. Iobotomization is used in AI models for restricting certain AI abilities to needs, such as ethical, security, or practical goals. Both processes balance the power and utility of AI with safety and human-centered values.

So-called large language models (LLM) are a type noted for their ability to achieve general-purpose language understanding and generation. The LLMs acquire these abilities by using massive amounts of input data to learn billions of parameters during their training. LLMs consume large computational resources during their training and operation. The LLMs are based on artificial neural networks (mainly transformers), and they can be (pre-)trained using self-supervised learning and semi-supervised learning. Especially reducing the computational cost and computation time of the LLM compression is a preferred option in the industry.

As AI continues to permeate various industries, there is a growing need for tools, or systems or devices that offer developers the capability to directly edit and manage AI models at a parameter level. Such tools will be critical in ensuring that AI systems remain accurate, relevant, and aligned with both operational goals and ethical standards.

Patent document US20240320510A1 explains sensitivity analysis of LLM layer, trimming intermediate layer and fine tuning the trimmed layer. However, this system does not apply any compression process address reducing computational costs while maintaining high accuracy and lobotomization/inception process for trained large language models.

Patent document US12099781 B1 describes a system that includes or is coupled with neural networks configured as generative models, which aligns with the invention's focus on generative AI models. The patent mentions the use of parameters such as weights and biases in neural networks. However, the document does not mention specific modules for compression, lobotomization, inception, integrity detection, which are key features of the disclosure.

As a result, all the problems listed above require innovation in the relevant field.

### SUMMARY OF THE INVENTION

The present disclosure addresses the abovementioned challenges by providing a novel system and method for parameter-wise editing, profiling, compressing, and manipulating generative AI models. The system enables direct modification of weights and biases and introduces advanced features for model optimization and control, such as model profiling, compression, lobotomization, inception, and integrity detection by at least one user interface.

The objective of the disclosure is to efficiently edit the AI model's weight and bias parameters within memory management. This includes compressing the model, deploying data injection, or removing procedures efficiently within the AI model.

Another objective of the disclosure is to improve specific features of the AI model without retraining the entire model.

Another objective of the disclosure, adapting models to evolving requirements or correcting specific information efficiently and accurately with the preventing/reducing risks of data privacy violations within increasing model accuracy.

Another objective of the disclosure, enabling the complex ecosystem of generative AI and multimodal models for analyzation and categorization.

In accordance with embodiments, a computer-implemented method and the device is provided for editing generative AI models that may comprise a large language model (LLM) or a multimodal model. The method and the device that employes the method involves providing an editor capable of adjusting weight and bias parameters in a generative AI model. A developer can directly modify or remove specific memories, ideas, or biases embedded within the generative AI model by adjusting these parameters. This process aims to improve at least one of model explainability, ethical AI control, model fine-tuning efficiency, or model deployment efficiency.

In accordance with other embodiments, the weight and bias parameters are considered learned representations of the generative AI model. The editor provides fine-grained control over internal components of the model, allowing for precise adjustments.

The device comprises a profiling module configured to adjust weight and bias parameters in a generative AI model and a developer interface which employed by user interface unit that allows a developer to directly modify or remove specific memories, ideas, or biases embedded within the model. The creation of the editor improves at least one of model explainability, ethical AI control, model fine-tuning efficiency, or model deployment efficiency.

In other device embodiments, the weight and bias parameters are learned representations of the model, and the editor provides fine-grained control over internal components. The specific memories, ideas, or biases include learned knowledge or encoded information within the model. Improving model explainability involves enhancing interpretability, improving ethical AI control facilitates responsible AI practices, improving model fine-tuning efficiency optimizes adjustment, and improving model deployment efficiency enhances operationalization.

In accordance with embodiments a system and device for editing large language models and multimodal AI models and the system includes at least one computer including at least one memory medium that stores the data and/or dataset of the model, at least one control unit that configured to processing the data within modules and according to requests and pre-defined configuration parameters from at least one user and/or client which communicates with the system with at least one communication unit to provide at least one output based on an input data and also establishing communication between the computers within the system; and the system comprises; at least one compression module, at least one lobotomization module and at least one inception module and at least one of the modules configured to identifying layers of the trained model with the weight matrices; and decomposing the weight matrices of the trained model into a tensor network structure; and the compression module configured to compress the size of the pre-trained layers of the tensorized model with compressing the decomposed weight matrices; and storing the tensor network structure in the memory medium; and the lobotomization module configured to injecting information to the trained model with encoding data values of the dataset in one or more tensors of the trained model associated with values of the dataset; and at least one inception module configured to removing information to the trained model with encoding zero data values of the dataset or removing the one or more tensor associated with values of the dataset to provide removing data that defined by user and/or client from the trained model; and at least one integrity detection module that has a baseline comparison and hashing unit that configured to hashing the model and re-hashing the model periodically, and comparing the re-hashed value and first hashed value to tracking the modification status of the trained model; and at least one integration module that provides connection and data transfer between external systems and platforms and the device.

Another embodiment of the disclosure, the system and/or device comprises at least one profiling module controlled by at least one control unit and the profiling module configured to arrange multiple micro-agent units which are controls the model with pre-defined tasks in the memory medium.

Another embodiment of the disclosure, control unit includes multiple sub-control units that provide controlling of the modules independently from each other.

Another embodiment of the disclosure, the system and/or device comprises the compression module includes compression rate unit that defines the compression ration with pre-defined or user input parameters; and energy efficiency unit configures compression speed and ratio with showing the energy efficiency of the compression process.

Another embodiment of the disclosure, the system and/or device comprises the lobotomization module includes at least one lobotomization input module which allows to custom commands inputs from user or client to the memory medium that are configuration for tensor deletion. The system and/or the device enhance resource utilization and speed of the generative model through the editing process, reduces size of the trained model, removes, or injects the data to the model.

Another embodiment of the disclosure, the system and/or device comprises the inception module includes inception input module, which allows to custom inputs and defines the knowledge or capabilities of the model for injection of the data with the tensorization of the new data which will inject.

In accordance with embodiments, lobotomization module starts working according to the instructions that received from at least one user. The instructions may comprise adding a dataset in the model. Additionally, or alternatively, the instruction may comprise removing a dataset from the model regarding to the inception module. The instruction includes the data to be added in and/or removed from the AI model.

In accordance with embodiments, the addition and/or removal of data of a dataset may be conducted, for example but without limitation, in accordance with at least one algorithm selected from, e.g., Parameterized Model Editing Tool (PMET), Model Editing via Memory Injection and Transformation (MEMIT), Rank-One Model Editing (ROME), Search, Edit, and Retain Algorithm for Consistency (SERAC), Knowledge Neurons (KN), etc., adapted to operate on tensors of a tensor network. Such algorithms may enable precise, parameterized edits to the model (e.g., LLM) by modifying specific parts of the internal knowledge of the model.

Another embodiment of the disclosure, the system and/or device comprises the integrity detection module includes knowledge integrity unit that allows to be monitoring the changes of the model with cognitive map monitoring unit and injection-deletion traceability unit which allows tracking the changes on the model according to the hashed and re-hashed values which are stored in the memory medium.

Another embodiment of the disclosure, the system and/or device comprises at least one user interface unit that can provide visual information to at least one user about the model and the editing process.

Another embodiment of the disclosure, the system and/or device comprises the user interface unit comprises at least one user deployment module that provides to data upload, download, command and configuration input ability to at least one user by user interface unit; and at least one plot module that provides plots data as a visual information regarding to the model specific information.

The disclosure is related to device and method for editing AI models to fulfil one, some or all aims mentioned above and will be obtained from the following detailed description. The disclosure is also related to: data processing systems with means for carrying out the methods; computer program products comprising instructions which, when the program products are executed by at least one computing unit, cause the at least one computing unit to carry out the methods; and computer-readable data carrier having stored thereon the computer program products, which may be computer-readable non-transitory storage mediums in some examples.

The protection scope of the disclosure is specified in the claims and cannot be limited to the description made for illustrative purposes in this brief and detailed description. A person skilled in the art can present similar embodiments in the light of the above and following descriptions without departing from the main theme of the disclosure.

### BRIEF DESCRIPTION OF FIGURES

For better understanding of the various embodiments described herein, and to show more clearly how these various embodiments may be carried into effect, reference will be made, by way of example, to the accompanying drawings which show at least one example embodiment, and which are now described. The drawings are not intended to limit the scope of the teaching described herein.

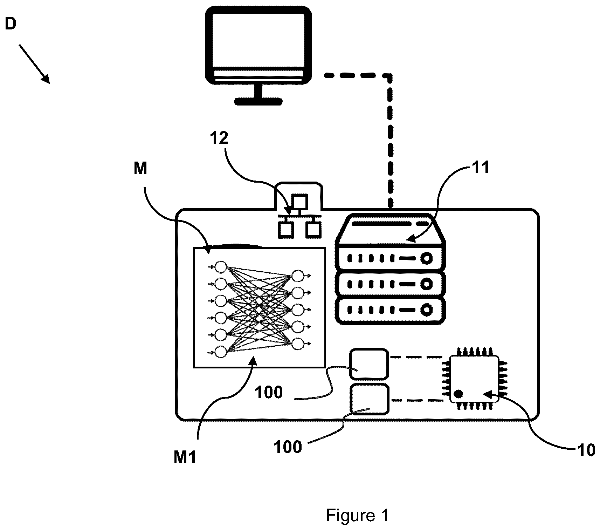

Figure 1 represents some embodiments of the disclosure.
Figure 2 represents some embodiments of the device.
Figure 3 represents some embodiments of the device control unit.

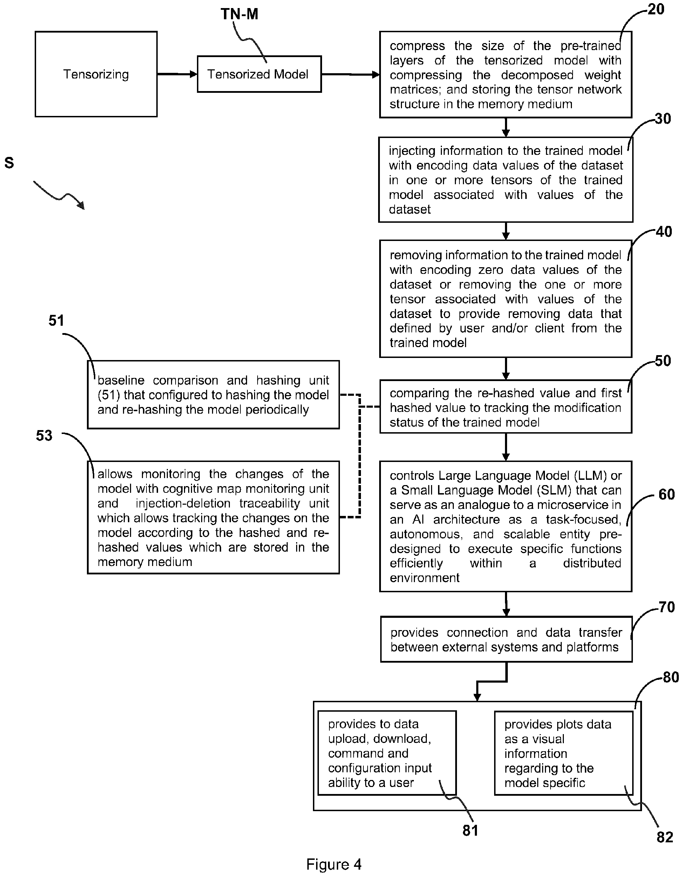

Figure 4 illustrates in a flowchart that shows the steps of a system in accordance with some embodiments of the disclosure.

For a better understanding of the above-mentioned figures, the reference numbers illustrated in the figures are provided for descriptive purposes and are not intended to limit the scope of the disclosure.

### DETAILED DESCRIPTION OF THE INVENTION

In this detailed description, device (D) and method for editing AI models is described by examples only for clarifying the subject matter without limiting the scope of the disclosure.

A device (D) for editing large language models (M) and multimodal AI models (M) and the device (D) includes at least one memory medium (11) that stores the data and/or dataset of the model (M), at least one control unit (10) that configured to processing the data within modules and according to requests and pre-defined configuration parameters from at least one user and/or client which communicates with the device (D) with at least one communication unit (12) to provide at least one output based on an input data; and it runs the instruction on the trained AI model (M); and the device (D) comprises; at least one compression module (20), at least one lobotomization module (30) and at least one inception module (40) and at least one of the modules (20, 30, 40) configured to identifying layers (M1) of the trained model (M) with the weight matrices; and decomposing the weight matrices of the trained model (M) into a tensor network structure; and the compression module (20) configured to compress the size of the pre-trained layers (M1) of the tensorized model (TN-M) with compressing the decomposed weight matrices; and storing the tensor network structure in the memory medium (11); and the lobotomization module (30) configured to injecting information to the trained model (M) with encoding data values of the dataset in one or more tensors of the trained model (M) associated with values of the dataset; and at least one inception module (40) configured to remove information to the trained model (M) with encoding zero data values of the dataset or removing the one or more tensor associated with values of the dataset to provide removing data that defined by user and/or client from the trained model (M); and at least one integrity detection module (50) that has a baseline comparison and hashing unit (51) that configured to hashing the model (M) and re-hashing the model (M) periodically, and comparing the re-hashed value and first hashed value to tracking the modification status of the trained model (M); and at least one integration module (70) that provides connection and data transfer between external systems and platforms (E) and the device (D).

Device includes at least one module for executing following methods which are at least one profiling module (60) that assesses model parameter redundancy per LLM layer with respect to certain evaluation metrics (e.g., reasoning); at least one compression module (20) compresses parameters with respect to redundancy profiling analysis executed by profiling module (60); at least one lobotomization module (30) deletes ideas from an AI model via model parameter engineering according to at least one request from user; at least one inception module (40) injects ideas into an AI model (M) via model parameter engineering according to at least one request from user; at least one integrity detection module (50) detects if model has been edited with at least one of the lobotomization module (30) and inception module (40); at least one user interface unit (80) provides input/output options to at least one user who may be a human.

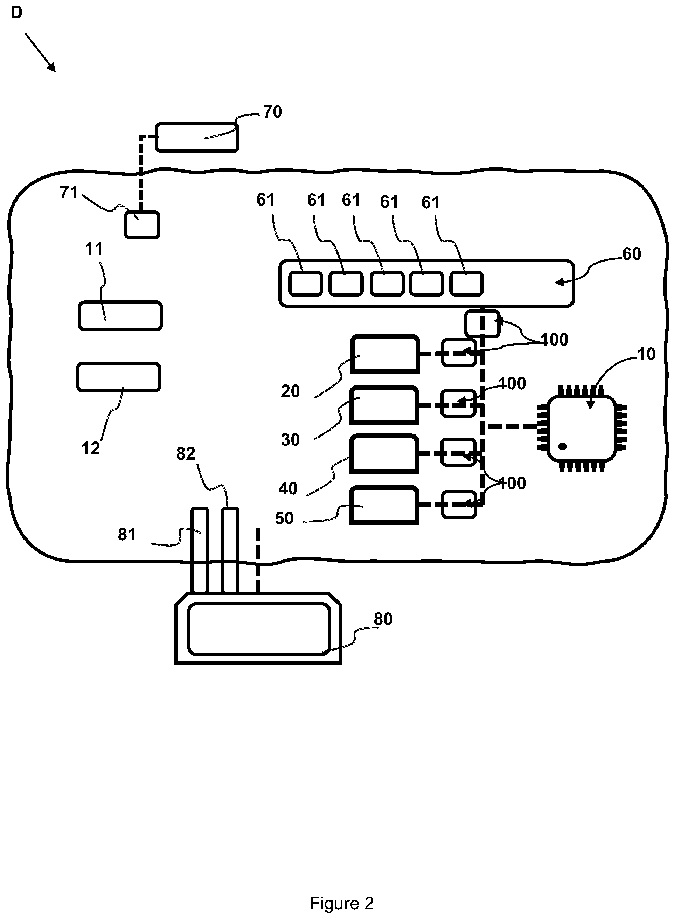

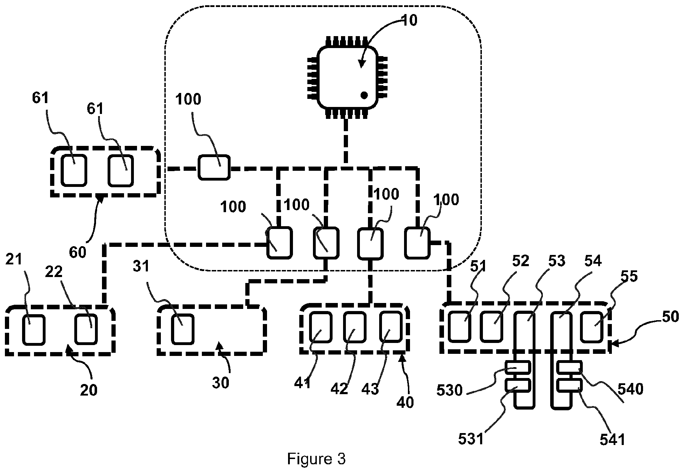

Figure 2 and figure 3 illustrate the device (D) including computing unit (10), which may process data within various modules according to requests and pre-defined configuration parameters. The control unit (10) may execute methods for profiling, compressing, lobotomizing, incepting, and detecting integrity, thereby facilitating the editing of AI models (M). The control unit (10) may interact with the memory medium (11) to store and retrieve data necessary for these processes. The control unit (10) may also coordinate with the communication unit (12) to ensure seamless data exchange between the system (S) and external entities. The control unit (10) may manage the compression module (20) to compress parameters, thereby reducing computational cost and time. Additionally, the control unit (10) may oversee the lobotomization module (30) to delete ideas from the AI model, ensuring the removal or modification of specific biases, memories, or knowledge. The inception module (40) may be controlled to inject new ideas, skills, or behavioral tendencies into the AI model, enhancing its capabilities. The integrity detection (50) module may be employed to ensure the model's (M) integrity by detecting unauthorized edits. The profiling module (60) may assess model parameter redundancy, optimizing the model's (M) performance. The control unit (10) may provide input/output options to users through the user interface unit (80), facilitating interaction with the system (S). The integration module (70) may enable the control unit (10) to connect with other computer systems or devices, offering flexible and secure deployment options. The control unit (10) may ensure that all these actions are executed in a coordinated manner, maintaining the system's (S) overall functionality and efficiency.

In a preferred embodiment of the disclosure, the control unit (10) comprises multiple sub-control units (100) and each of them controls units that controls and/or runs the other modules (20, 30, 40,50,60, 70, 80).

In preferred embodiment of the disclosure, the memory medium (11) may serve as a storage unit within the device (D), potentially storing the data and datasets of the model (M). This component may be integral to the overall functionality of the device (D), as it may allow for the retention and retrieval of information required for the operation of various modules. The memory medium (11) may be associated with several actions, including storing the tensor network structure of the model (M), which may be crucial for the compression module's (20) operation. This storage capability may facilitate the execution of methods for profiling, compressing, lobotomizing, incepting, and detecting integrity, as these processes may rely on the data housed within the memory medium (11). The memory medium (11) may also interact with the lobotomization and inception modules, potentially enabling the encoding and removal of data values within the model (M). This interaction may be essential for the modification and optimization of the model (M), as it may allow for the alteration of the model's (M) parameters. Additionally, the memory medium (11) may support the integrity detection module (50) by storing hashed values, which may be used to track modifications and ensure the model's (M) integrity. This capability may be vital for maintaining the reliability and security of the model (M), as it may provide a means of detecting unauthorized changes. The memory medium's (11) role in storing and managing data may be further enhanced by its integration with the user interface unit (80), which may provide visual feedback and interaction options to users. This integration may facilitate user engagement with the device (D) or the system (S), allowing for the management and manipulation of the model's (M) data. Overall, the memory medium (11) component may be a foundational element of the device (D) or system (S), supporting a range of actions and interactions that may be essential for the editing and management of trained models (M1).

In a preferred embodiment of the disclosure, user interface unit (80) provides a visual representation of the model's (M) final parameters after compression is displayed, providing a graphical view of parameter optimization. This could help the user who may be a developer understand how compression affected the model's (M) structure at a parameter level.

Another preferred embodiment of the disclosure comprises; lobotomization module (30) and inception module (40) that always communicate with integrity detection module (50). Thus, always provides integrity check for the model (M).

According to the disclosure, compression module (20), lobotomization module (30), inception module (40), integrity detection module (50) and profiling module (60) controlled independently from each other by at least one control unit (10) which may be a processor, such as GPU, CPU, FPGA, ARM, metal processor etc.

In a preferred embodiment of the disclosure, control unit (10) is a processor, and it may be a single-CPU, Multi-CPU or single GPU, Multi-GPU. According to the process, user can select the processor type on the user interface unit (80).

Another embodiment of the disclosure, the device (D) includes at least one memory medium (11) which controlled by the control unit (10), and the memory medium (11) comprises compression module (20), lobotomization module (30), inception module (40), integrity detection module (50) and profiling module (60) within independent unit of itself.

In preferred embodiment of the disclosure, device (D) is a user deployment module (81) and runs a user interface unit (80) to provide input and output options to at least one user such as a human, and a system which configured to run to each module independently from each other. System comprises independent multiple dedicated control unit (10) and memory medium (11). All modules communicate with each other via at least one communication unit (12) and user deployment module (81) provides data upload, download, command, and configuration input ability to at least one user by user interface unit (80).

According to a preferred embodiment of the disclosure, system is a computer system which may run in a local network or cloud computing system and the device (D) is a client it may be a desktop, laptop, tablet, mobile phones etc. which is comprises at least one visual output hardware and data input hardware. An alternative embodiment of the invention, entire system may run on at least one computer which comprises have visual output and data input hardware.

Profiling module (60) employs process of analyzing and categorizing the behavior, performance, and characteristics of artificial intelligence (AI) systems with the support of at least one control unit (10), according to the user requests from user interface unit (80) for the purposes of optimization, understanding, or regulatory compliance AI profiling can be applied across various domains, including system performance, ethical and bias considerations, and security aspects.

Profiling module (60) comprises more than one micro-agent units (61) which are Large Language Model (LLM) or a Small Language Model (SLM) that can serve as an analogue to a microservice in an AI architecture.

A micro agent unit (61) is a task-focused, autonomous, and scalable entity predesigned to execute specific functions efficiently within a distributed environment with the support of at least one control unit (10). The micro agent units (61) allow to be updated or scaled independently from each other and the whole AI system without disrupting the broader system. Whole micro agent units (61) can be run independent from each other such as they can employ processes as parallel with exchanging outputs as needed to fulfill various aspects of user interaction seamlessly. According to the disclosure, micro agent units (61) detailed and structures framework for categorizing by roles skills and evaluation metrics. Thus, provides assessing and optimizing performance for various AI capabilities. Profiling module (60) executes role classification, skill requirement per role, evaluation metrics for skills analysis.

In preferred embodiment, role classification processes can be executed with multiple micro agent unit (61) for conversational expert (CE) maintains dialogue coherence, handles multi-turn interactions, and ensures smooth conversational flow; general-purpose assistant (GPA) provides general knowledge and reasoning capabilities, retrieves information, and performs a wide range of general tasks; domain Expert (DE) specializes in specific domains such as legal, medical, or financial areas, while offering expertise for highly specialized tasks; planning assistant (PA) provides plan creating, decision-making, and scheduling based on objectives; emotion manager (EM) detects and responds to human emotions, while providing empathetic and emotional context in interactions; action executor (AE) executes task execution that performing actions based on input and implementing tasks; ethical guard (EG) monitors AI behavior for ethics, while filtering harmful content, and ensuring compliance with ethical guidelines; knowledge retriever (KR) specializes in retrieving and integrating data from multiple sources with solving complex queries through data access; security watchdog (SW) ensures the AI's security with preventing adversarial attacks, and maintaining data integrity; feedback learner (FL) continuously learns from interactions and feedback, enhances performance and adaptability over time.

In a preferred embodiment of the disclosure, each role has associated skills with varying levels of importance for the skill requirements per role with the multiple micro agent units (61). The key skills are perception skill provides understanding the environment, using benchmarks in computer vision, speech recognition, and natural language understanding that Evaluated through COCO Captions (vision-language), VQA (Visual Question Answering), and SQuAD (Question Answering); reasoning and knowledge representation skill provides utilizing logical reasoning tasks, commonsense reasoning benchmarks, and knowledge graph completion to assess AI's reasoning abilities that executed by SuperGLUE (General NLU), HellaSwag (Commonsense Reasoning), and WikiSQL (SQL Query Planning); planning and decision-making skill involves benchmarking to assess the ability to plan, make decisions, and act in real-time environments that measured through tasks such as ALFWorld (Planning in Simulations) and bAbl reasoning; memory skill maintains context across long sequences or dialogues, evaluated through multi-turn conversations or context-tracking tasks that Assessed using DSTC-9 (Context Tracking) and Ubuntu Dialogue Corpus (Long-Term Dialogue); action and execution skill performs tasks and generating appropriate responses based on input, including action-response tasks in NLP and robotics that evaluated through the E2E NLG Challenge (Action-Response) and WikiSQL; communication skill assessed through dialogue systems, consistency tasks, and multi-agent communication that executed by PersonaChat and BlendedSkillTalk (Open-Domain Dialogue); emotional intelligence skill handles human emotions by generating empathetic responses, based on emotion detection datasets that measured using EmpatheticDialogues and GoEmotions (Emotion Recognition); ethical and compliance skill ensures AI behavior aligns with ethical standards, focusing on bias detection and fairness that executed by RealToxicityPrompts (Toxicity Detection), BBQ (Bias Benchmark for QA), and CrowS-Pairs (Bias Detection); security skill evaluated through robustness tests against adversarial attacks and security challenges that evaluated through AdversarialQA and RobustBench; data retrieval and integration skill involves open-domain QA tasks and retrieval from large-scale databases that assessed via TriviaQA, KILT Benchmark, and Natural Questions; learning and adaptation skill executes machine learning benchmarks, continual learning, and adaptation tasks that measured through LAMBADA (Language Modeling) and CLB (Continual Learning Benchmark).

Each skill runs on independent micro agent unit (61) that is weighted differently based on its importance to a particular role as a preset configuration. For example, Communication (90%) is highly emphasized for the conversational expert; while planning and decision-making (90%) is critical for the planning assistant. In preferred embodiment of the disclosure metrics ensure that the skills are aligned with practical tasks and scenarios, resulting in a fine-tuned understanding of the AI's capabilities.

The device (D) involves "tensorizing" self-attention and multi-layer perceptron layers (M1) of a large language model using a tensor network. The tensorizing, effectively truncates correlations present in the large language model (LLM). The degree of truncation can be controlled via the bond dimension of the tensor network. The method enables a significant reduction in the size of the LLM (and thus storage space required), while maintaining accuracy. In practice, the compressed LLM requires less energy and memory, and operations such as training, retraining, and inference become more efficient and require smaller resources.

The compression (20), lobotomization (30) and inception (40) modules uses pre-trained layers (M1) of a large language model (LLM). The large language model (M) has a plurality of layers and weight matrices. The devices (D) identify layers (M1) of the LLM with the weight matrices and then decomposing the weight matrices of the LLM into a tensor network structure and then compressing the decomposed weight matrices. The tensor network structure can be stored in a data storage unit. The decomposition of the weight matrices into the tensor network structure enables the tensor network to be reduced in size to remove storage requirements.

According to the final modification of the model (M), the device (D) configured to reconstructing the initial weight matrix to enable the LLM to be used. In a further aspect, the method further comprises computing difference between elements of the initial weight matrix and the reconstructed weight matrix. The method of any of above claims can be repeated for several times to determine the best decomposition of the tensor network which reduces the amount of storage required but provides sufficient information.

The reconstruction of the weight matrix is carried out by contracting the MPOs in step followed by re-shaping the MPOs into the form of a tensor star. Finally, the tensor start is re-shaped back into a matrix form with the support of at least one processor.

The difference between the elements of the initial weight matrix and the reconstructed weight matrix to determine whether the reconstructed weight matrix is smaller than the initial weight matrix. This process is repeated several times using different permutations and the smallest one of the reconstructed weight matrices is kept in step. This value will provide an acceptable decomposition.

The device (D) includes a compression module (20) which may comprise an independent control unit (10). Also, compression module (20) includes at least one compression rate unit (21) and energy efficiency unit (22). The energy efficiency unit (22) can allow the user select between Speed, Optimal, Energy Saver settings for the compression process of the AI model (M). Also, device (D) has at least one user interface unit (80) and provides visual feedback on how the model's (M) performance metrics compare across different jobs and configurations. Relative metrics like latency, throughput, memory usage, CPU, GPU, and GMACs (giga multiply-accumulate operations per second) are displayed for different configurations.

The (M1) of the LLM are, for example, at least one of self-attention layers (M1) or multi-perceptron layers (M1). These layers (M1) are used in LLMs. The decomposing of the initial weight matrix into the tensor network structure comprises is carried out, in one aspect, by creating a tensor star formed from a plurality of tensors. The tensors have a smaller dimension than the weight matrices.

In one aspect, the plurality of tensors comprises at least pre-programmed one core tensor. The LLMs have in one implementation a core tensor which is pre-defined.

The compression module (20), compresses the large language model (M) for example, using a random search algorithm for performing a permutation on edges of nodes of the tensor network. This enables a variety of different compression approaches to be tried to identify an optimal compression to reduce the size of the data whilst retaining the information.

In a further aspect, the compression module (20) configured to splitting the edges of the nodes of the tensor network into n groups and merging the edges of the nodes of the tensor network into a single-index vector.

In a further aspect, the compression module (20) configured to determining an optimal virtual edge dimension of at least one of Matrix Product Operators (MPO) form or Matrix Product States (MPS) form.

In a preferred application of the device (D) the image attached which is the **Llama 2 7B** trained model (M) and two compression jobs. The chart allows users to see performance changes, with clear visual representation showing how compression affects different system resources and performance indicators.

### EXAMPLE 1

The window shows key model specifications after the compression process is completed. As an example (in the image provided):
a. Compression Rate: It specifies High Compression (INT4), meaning the model is quantized down to 4-bit integers, significantly reducing its size.
b. Energy Efficiency: Displays an efficiency rating of 52.8%, achieved using High Speed settings, which balances performance and power consumption.
c. Model Size: The compressed model (M) size is now 3 GB, significantly smaller than the original, making it more suitable for deployment on resource-constrained hardware.
d. Throughput: The system processes 500 tokens per second, giving a real-time indication of how fast the compressed model (M) generates outputs.

The benchmark comparison between the original and already profiled/compressed models enables users to assess trade-offs, such as how much memory has been saved versus any potential increases in latency.

The device (D) includes lobotomization module (30) deletes ideas from an AI model via model parameter engineering according to at least one request from user. The lobotomization module (30) surgically removes or modifies specific biases, memories, or knowledge from an AI model. It offers pre-configured presets for quick access to common lobotomization tasks (e.g., removing sociodemographic or ideological biases), as well as allowing for detailed, custom modifications through file uploads and manual commands.

The lobotomization module (30) provides pre-configured options to remove biases and knowledge based on specific categories. These presets allow the user to quickly select common types of biases or information that need to be deleted or modified. According to the example of preset configurations for the user; sociodemographic bias, targets biases related to religious, racial, gender, or cultural factors. This preset would focus on reducing or eliminating unfair biases that may stem from the model's (M) training data; ideological bias focuses on removing ideological or political biases, toxic content, or stereotyping. It ensures that the model (M) adheres to ethical guidelines and avoids generating biased or harmful outputs; data-related bias handles issues related to the misrepresentation of temporal knowledge, outdated information, or other data inconsistencies. It allows for the removal or adjustment of specific knowledge that may be outdated or inaccurate.

In preferred embodiment of the disclosure, the lobotomization module (30) starts with identifying specific tensors to encode data values or relationships derived from a primary dataset. This involves representing data numerically for encoding into these tensors, which capture the intricate learned structures of the model (50) such as embeddings, token relationships, and other structural components. Each tensor corresponds to distinct parts of the model (M) learned representation, and tensors are selected based on their relevance to the primary dataset. The primary dataset's values may first be analyzed by a predetermined model (M) that establishes relevant data relationships.

Upon running the instruction on the AI system, data values of the dataset to be added are encoded in one or more tensors of the AI system which include values associated with values of the dataset to be added.

After identifying the appropriate tensors for data integration, additional tensors, particularly those of a higher order, may also be selected. These higher-order tensors, which represent relationships between tokens, are essential for encoding complex data interrelations.

In a preferred embodiment of the disclosure, the lobotomization module (30), configured to when the user send an instruction at least comprises adding the first dataset and after the step of encoding of the data values, modifying, in one or more tensors in the trained model (M), encoded relationship values between the data values encoded in the one or more tensors based on the data values of the first dataset added in the trained model (M).

In preferred embodiment of the disclosure, lobotomization module (30) also includes a lobotomization input module (31) which can enable the user's custom inputs, as well as upload custom files.

### EXAMPLE 2

The user interface unit (80) captures and logs interactions where the user can issue commands, as shown in the interaction log:

Example of Custom Command: The user inputs a command such as *"I want to delete who is Harry Potter from the memory",* and the system proceeds by creating and updating a cognitive map to perform the lobotomization.

The real-time system responses indicate the progress of the operation, showing steps like *"Creating cognitive map..."* and *"Updating cognitive map..."* as the model's (M) memory is selectively altered.

### EXAMPLE 3

IP_conflict_specs.pdf: This custom file (2.1 MB) is uploaded and ready to be loaded for specific lobotomization requirements related to intellectual property conflicts or other custom needs.

Insert new file: Another option to upload new files allowing the user to define more complex lobotomization rules or objectives.

User interface unit (80) can provide map of lobotomization which includes a visual map representing the lobotomization process is provided, offering a detailed flow of how the selected or custom lobotomization tasks are carried out. The map includes the following key components such as specific target that may be specific knowledge or biases that checks relationships and routing the paths for updates or deletions; path updates which are interconnected knowledge, modifying or deleting the relevant nodes. The device (D) can differentiate between general knowledge and specific instances, allowing for precision in deleting unwanted concepts or retaining general understanding. Also, module updates or deletes specific paths of knowledge while ensuring that overall coherence and functionality of the model (M) remain intact.

In a preferred embodiment of the disclosure, device (D) stores the real-time interaction logs in at least one memory medium (11) which are user commands and system responses during the lobotomization process. This helps users track progress and verify that the correct changes are being applied to the model's (M) knowledge base. Also, this information is useable for integrity detection unit (50) for checking the model (M) integrity.

The device (D) includes at least one inception module (40) injects ideas into an AI model (M) via model parameter with user requests via user interface unit (80). The inception module (40) that operates within an AI microservice architecture, designed to inject new knowledge, skills, memories, or behavioral tendencies into a pre-trained AI model (M). It resolves generic re-train process needs after the injection. The inception module (40) works as the counterpart to the lobotomization module (30), allowing users to "incept" or "seed" specific ideas, tasks, biases, or capabilities directly into a model's cognitive map, making it adaptable, updated, and capable of performing new tasks.

The inception module (40) provides predefined settings to inject specific types of knowledge or capabilities into the model (M) that pre-loaded the system by at least one user. Such as domain-specific knowledge allows users to inject new domain expertise into the model (M), such as medical, legal, or financial knowledge; behavioral modification adds new behavioral patterns to the model (M), like politeness, empathy, or assertiveness that adjust the way the model (M) interacts, making it adaptable to different conversational tones or objectives; cultural sensitivity and adaptation injects culturally relevant knowledge or local sensitivities that helps the model (M) become attuned to regional contexts, languages, or cultural nuances.

In some embodiments, the inception module (40) adds zero values or removing one or more tensors from the trained model (M). And the inception module (40) configured to identifying tensors in the model (M), encoding one or more data values of the dataset and/or encoding one or more relationships between the one or more data values; and setting to zero values associated with the data values or relationships of the second dataset in the identified tensors, or removing the identified tensors from the models (M).

According to the device (D), user can manually specify custom commands to inject new information, biases, behaviors with inception input module (41). User interface unit (80) allows precise input like lobotomization input module (31).

### EXAMPLE 4

A user could input "I want to add knowledge about climate change mitigation technologies", and the device (D) will generate an inception map, building the new knowledge graph and updating the model (M) accordingly. Real-time system responses, such as "Creating new cognitive map..." and "Updating memory structure with climate change data...", guide the user through the injection process, ensuring full transparency.

In a preferred embodiment of the disclosure, device (D) supports uploading files containing structured information or domain-specific knowledge that they want to inject into the model by user(s). This was established by inception upload unit (42) that comprised by the device (D). This feature enables users to seed the model (M) with proprietary data or custom knowledge that is essential for their AI models (M).

Inception upload unit (42) enables the user(s) to insert a new file. Thus, it provides the option to upload new custom files, such as product catalogs, business strategies, or legal frameworks, for seamless model updates.

### EXAMPLE 5

climate_change_tech.pdf: An example file that contains detailed knowledge about climate change technologies. Once loaded, this document is parsed, and the knowledge is integrated into the model's (M) memory for future use.

In a preferred embodiment of the disclosure, device (D) includes at least one inception map unit (43) that provides conceptual map of inception. The inception map unit (43) triggers the user interface unit (80), and a visual map helps users track how new knowledge is injected into the model (M). The map outlines the inception process provided by the inception module (40), showing how new ideas or information are structured within the model's (M) cognitive graph.

The inception graph includes knowledge nodes that highlights the insertion of new knowledge nodes (e.g., climate change technologies), displaying how these nodes integrate with existing ones, and forming connections within the model's (M) cognitive architecture. Also, includes relationship building that visualizes how the new knowledge relates to existing concepts. For example, new ideas might branch out from existing knowledge on environmental policies or technology innovations, building a cohesive knowledge framework. Also, includes contextual embedding that ensures that the newly injected information is contextually embedded within the model's (M) existing knowledge, allowing it to respond intelligently based on the new information.

The inception module (40) allows the customization of injection pathways. According to this, user(s) have an option to tailor the knowledge injection pathways based on their needs which are selective knowledge inception that allows the user(s) to specify whether the new knowledge should override existing information or complement it. (e.g., users may inject new technology updates without overwriting older, foundational knowledge) and behavioral modifications that ensure changes to behaviors like empathy or assertiveness can be tailored to affect only specific contexts (e.g., customer service interactions versus technical consultations).

In a preferred embodiment of the disclosure, device (D) stores the real-time interaction logs in at least one memory medium (11) which are user commands and system responses during. The inception module (40) ensures real-time commands and interaction logs with giving full visibility into the inception process. Example Log: "You: I want to add knowledge about renewable energy policy" followed by system responses such as "Injecting renewable energy data..." and "Updating policy knowledge graph...". This log allows users to confirm the model's updates and ensure that the new knowledge or behaviors are appropriately integrated into the model (M).

In preferred embodiment of the invention, device (D) comprises at least one integrity detection module (50) that ensures the integrity and trustworthiness of AI models (M) by continuously monitoring for unauthorized changes, adversarial inputs, and abnormal behavioral shifts. By leveraging cryptographic hashing, behavioral monitoring, adversarial defenses, and rollback capabilities, the integrity detection module (50) guarantees that AI systems remain secure, ethical, and reliable. Its integration into broader security infrastructures makes it a powerful tool for enterprises relying on AI in sensitive or high-stakes environments.

### A few features of our integrity detector are:

Integrity detection module (50) comprises a baseline comparison and hashing unit (51) that uses hashing algorithms to create a unique "fingerprint" of the model (M) at a specific point in time (referred to as the baseline). The baseline includes information on model parameters, structure, and behavior such as hash generation and real-time integrity checking.

Every component of the model (M), including weights, biases, hyperparameters, and metadata, is hashed to generate a cryptographic checksum that serves as the model's (M) baseline integrity reference.

The device (D) periodically re-hashes the model (M) and compares the current checksum against the baseline. Any discrepancies trigger an integrity alert. Thus, it provides real-time integrity checking.

### EXAMPLE 6

Upon completing an update or model inception process, the integrity detection module (50) generates a new hash and stores it within memory medium (11) securely. If an adversary attempts to change the model's (M) behavior without authorization, the hash will no longer match the baseline, and an integrity violation is flagged.

The integrity detection unit (50) comprises a behavioral monitoring unit (52) provides monitoring the behavioral output of the model (M) during interactions to ensure no subtle alterations have compromised its performance. The integrity detection module (50) establishes a behavior baseline with the support of the behavioral monitoring unit (52), including expected outputs for given inputs based on its original training. This includes typical outputs for well-defined inputs, accuracy metrics, and knowledge patterns.

Over time, the integrity detection module (50) provides behavior drift detection that tracks changes in behavior that deviate from the expected patterns. Sudden behavioral drift - particularly related to ethical considerations (bias, toxicity) or incorrect knowledge output - is flagged for review.

The behavioral monitoring module (52) provides dynamic interaction tests that can run periodically, and interaction tests simulated with known prompts to evaluate if the model (M) behaves consistently. For example, if the model (M) suddenly shows bias or provides incorrect information, an alert is generated.

The device (D) includes knowledge integrity unit (53) monitors the cognitive map and knowledge graph of the model (M) to ensure that only authorized updates have been applied, and no information has been improperly deleted, altered, or injected. The mentioned knowledge integrity unit (53) comprises at least one cognitive map monitoring unit (530) and at least one injection-deletion traceability unit (531).

The cognitive map monitoring unit (530) provides periodically checking the integrity of the knowledge graph and its connections. If any unauthorized or suspicious changes to the knowledge base (such as unexpected deletions, new nodes, or re-routed relationships) are detected, the device (D) alerts the user via user interface unit (80).

The injection-deletion traceability unit (531) maintains an audit log of any inception or lobotomization processes with the lobotomization module (30) and/or inception module (40) that occurred within the model (M), ensuring every change is traceable. Unauthorized deletions or injections are flagged for manual review within the memory medium (11) for providing to user via user interface unit (80).

### EXAMPLE 7

If a rogue process attempts to delete critical information (such as product details or regulations) or inject misinformation into the model's (M) memory, the cognitive map's expected structure will change, and the device (D) will flag the anomaly.

The device (D) includes at least one security and adversarial input detection unit (54), and the module works with the support of at least one control unit (10). The adversarial input detection unit (54) provides to the model integrity detection module (50) to safeguarding against adversarial attacks that attempt to alter the model's (M) behavior using crafted inputs designed to exploit weaknesses such as adversarial attack monitoring and robustness checks.

The adversarial input detection unit (54) includes at least one adversarial attack monitoring unit (540) that monitors all the actions for known adversarial techniques (e.g., gradient-based attacks, model (M) inversion, or poisoning). The device (D) can spot abnormal behavior that signals tampering by simulating and checking for adversarial input scenarios.

Robustness checking unit (541) running by periodically (in a predefined time period) the integrity detection unit (50) that provides robustness checks by testing the model (M), which is defined/uploaded to the device (D) by at least one user or client with adversarial examples. If the model (M) begins to show vulnerabilities to previously mitigated adversarial inputs, robustness checking unit (541) indicates with the user interface unit (80) that the model's (M) integrity has been compromised.

The integrity detection unit (50) comprises at least one version control and rollback unit (55) to enhancing transparency and control, and it maintains a full version history of the model (M), allowing for quick identification of when and where a potential compromise occurred which are version snapshotting feature that provides capturing a snapshots of the model's (M) state when the model (M) undergoes significant modification (e.g., compression, inception, or lobotomization). This includes both the hashed parameter sets and behavior logs. In a preferred embodiment of the disclosure, the rollback unit (55) can provide quickly roll back to a previous, verified version of the model (M) in case of a detected integrity issue, ensuring that unauthorized changes are immediately undone, and the model (M) remains functional and trustworthy.

### EXAMPLE 8

If an integrity check reveals a problem, users or clients can revert to a version from before the compromise, ensuring minimal downtime and preserving trust in the device (D) or system can be provided by group of devices (D).

The device (D) comprises at least one integration module (70) that provides integration between the other computer systems or devices, and thus provides to the users with flexible, secure, and efficient deployment options for compressed models (M) by a compression module (20) within the AI model (M) optimization workflow. Whether targeting local servers, cloud platforms, or edge devices, this feature ensures that models (M) are tailored to their environment for optimal performance. Additionally, the ability to insert a license time offers crucial control over model (M) usage, allowing users to enforce time-based access and ensure compliance with commercial agreements. This functionality ensures that AI models (M) remain secure, optimized, and properly licensed throughout their lifecycle.

The integration module (70) can export the AI models (M) from the device (D) and can be work within multiple platforms like local servers such as Laptop/Desktop or On-Premise HPC (High-Performance Computing) which is suitable for enterprises that operate on-premise hardware with high computational power, such as private data centers or research facilities; cloud servers such as private cloud which are designed for businesses and organizations with dedicated cloud infrastructure and also public clouds which are global cloud providers like Google Cloud Platform (GCP), Amazon Web Services (AWS), and Microsoft Azure; edge devices which are mobile phones, tablets, televisions, IoT devices, cars, drones or embedded systems.

The integration module (70) includes licensing unit (71) that provides licensing options like time-limited access which may be time limited licenses, flexible licensing options which have extendable duration. Licensing unit (71) includes expiration management feature which is a mechanism such as automatic deactivation or notifications for renewal are triggered, giving control back to the license owner. This ensures users only have access within the agreed timeframe, preventing misuse or extending deployments without proper authorization.

The integration module (70); provides a deployment process with the export interface that offers a simple and streamlined process for deploying the model (M). Platform-specific optimizations ensured by the integration module (70), and the model (M) is optimized for the chosen deployment platform (e.g., adjusting for hardware constraints in edge devices like mobile phones, or leveraging cloud resources efficiently in AWS or GCP environments).

In a preferred embodiment of the disclosure, seamless integration established by exporting the model (M) from device (D) to cloud platforms (e.g., AWS, GCP, Azure) leverages cloud-native APIs, storage, and orchestration systems like Kubernetes or Docker containers, enabling immediate deployment and scaling. Edge deployment optimization for edge devices ensured by the device (D); and model (M) compression techniques like quantization (e.g., INT8, INT4) are applied to the AI model (M) for lightweight, fast, and energy-efficient inference, making it ideal for real-time processing on limited hardware like embedded systems, drones, or IoT devices.

Alternatively, the device (D) and/or system (S) may include a plurality of computing units (10), which are a processors that are used by the computing unit (10), and these processors may function in parallel and perform certain functions. The user interface unit (80) can be a hardware or a display, the display may be, but not limited to, a computer monitor or an LCD display such as that for a tablet, mobile phone etc. The user interface may be an Application Programming Interface (API) or a web-based application that is accessible via the network unit. The communication unit (12) may be a standard network adapter like an Ethernet or 802.11x adapter.

The memory medium (11) may store the program instructions for an operating system, program code for other applications, an input module, a plurality of machine learning models (M), an output module, and a database. The machine learning models (M) may include, but are not limited to, image recognition and categorization algorithms based on deep learning models (M) and other approaches. The database may be, for example, a local database, an external database, a database on the cloud, multiple databases, or a combination thereof.

The programs comprise program code that, when executed, configures the computing unit (10), which is at least one processor to operate in a particular manner to implement various functions and tools for the system or device (D).
In alternative embodiment of the disclosure, the system (S) may include additional computer resources. The additional computing resources may include one or more quantum simulators, e.g., quantum simulator. A quantum simulator is a quantum computer that may be programmed to simulate other quantum systems and their properties. Example quantum simulators include experimental platforms such as systems of ultracold quantum gases, trapped ions, photonic systems, or superconducting circuits.

The additional computing resources may include one or more classical processors, e.g., classical processor. In some implementations, the one or more classical processors, e.g., classical processor may include supercomputers, i.e., computers with high levels of computational capacity. For example, the classical processor may represent a computational system with many processors, e.g., a distributed computing system or a computer cluster.

The device (D) and system (S) of the present disclosure can be applicable to any computation system with configurations as set out above. In a preferred embodiment of the disclosure, the method and system, the tensor network section of the method can run on a CPU, a GPU, or an FPGA, being this not a restriction of the disclosure.

The method and system of the present disclosure can be applicable to any computation system with configurations as set out above and creates results to the user(s).

### REFERENCE NUMERALS

10. Control unit
100.Sub-control unit
11. Memory medium
   12. Communication unit
20. Compression module
21. Compression rate unit
22. Energy efficiency unit
30. Lobotomization module
31. Lobotomization input module
40. Inception module
41. Inception input module
42. Inception upload unit
43. Inception map unit
50. Integrity detection module
51. Baseline comparison and hashing unit
52. Behavioral monitoring module
53. Knowledge integrity unit:
530. Cognitive map monitoring unit
531. Injection-deletion traceability unit
54. Security and adversarial input detection unit
540. Adversarial attack monitoring unit
541. Robustness checking unit
55. Rollback unit
60. Profiling module
   61. Micro-agent units
70. Integration module
71. Licensing unit
80. User interface unit
   81. User deployment module
82. Plot module
D. Device
M. Model
M1. Layers
TN-M. Tensorized model
E. External systems and platforms

## Claims

1. A device (D) for editing large language models and multimodal AI models and the device (D) includes at least one memory medium (11) that stores the data and/or dataset of the model (M), at least one control unit (10) that configured to processing the data within modules and according to requests and pre-defined configuration parameters from at least one user and/or client which communicates with the device (D) with at least one communication unit (12) to provide at least one output based on an input data; and it runs the instruction on the trained AI model (M); and the device (D) comprises;
at least one compression module (20), at least one lobotomization module (30) and at least one inception module (40) and at least one of the modules (20, 30, 40) configured to identifying layers (M1) of the trained model (M) with the weight matrices; and decomposing the weight matrices of the trained model (M) into a tensor network structure; and
the compression module (20) configured to compress the size of the pre-trained layers (M1) of the tensorized model (TN-M) with compressing the decomposed weight matrices; and storing the tensor network structure in the memory medium (11); and the lobotomization module (30) configured to injecting information to the trained model (M) with encoding data values of the dataset in one or more tensors of the trained model (M) associated with values of the dataset; and
at least one inception module (40) configured to removing information to the trained model with encoding zero data values of the dataset or removing the one or more tensor associated with values of the dataset to provide removing data that defined by user and/or client from the trained model (M); and
at least one integrity detection module (50) that has a baseline comparison and hashing unit (51) that configured to hashing the model (M) and re-hashing the model (M) periodically, and comparing the re-hashed value and first hashed value to tracking the modification status of the trained model (M); and
at least one integration module (70) that provides connection and data transfer between external systems and platforms (E) and the device (D).

2. A device (D) according to the claim 1, comprises at least one profiling module (60) controlled by at least one control unit (10) and the profiling module (60) configured to arrange multiple micro-agent units (61) which are controls the model (M) with pre-defined tasks in the memory medium (11).

3. A device (D) according to any one of the preceding claims, control unit (10) includes multiple sub-control units (100) that provides controlling of the modules (20, 30, 40, 50 60, 70) independently from each other.

4. A device (D) according to any one of the preceding claims, wherein the compression module (20) includes compression rate unit (21) that defines the compression ration with pre-defined or user input parameters; and energy efficiency unit (22) configures compression speed and ratio with showing the energy efficiency of the compression process.

5. A device (D) according to any one of the preceding claims, wherein the lobotomization module (30) includes at least one lobotomization input module (31) which allows to custom commands inputs from user or client to the memory medium (11) that are configuration for tensor deletion.

6. A device (D) according to any one of the preceding claims, wherein the inception module (40) includes inception input module (41), which allows to custom inputs and defines the knowledge or capabilities of the model (M) for injection of the data with the tensorization of the new data which will inject.

7. A device (D) according to any one of the preceding claims, wherein the integrity detection module (50) includes knowledge integrity unit (53) that allows to monitoring the changes of the model (M) with cognitive map monitoring unit (530) and injection-deletion traceability unit (531) which allows tracking the changes on the model (M) according to the hashed and re-hashed values which are stored in the memory medium (11).

8. A device (D) according to any one of the preceding claims, it includes at least one user interface unit (80) that can provide visual information to at least one user about the model (50) and the editing process.

9. A device (D) according to claim 8, wherein the user interface unit (80) comprises at least one user deployment module (81) that provides to data upload, download, command and configuration input ability to at least one user by user interface unit (80); and at least one plot module (82) that provides plots data as a visual information regarding to the model (M) specific information.

10. A device (D) according to any one of the preceding claims, device (D) is configured cloud computer that has data transfer capability to multiple devices as a client which has independent processors and data input and/or output infrastructure.

11. Device (D) is one computer or computer system and the modules (20, 30, 40, 50, 60, 70) are computer program product comprising instructions defined in a memory which, when the program is executed by at least one computing unit (10), cause the at least one computing unit (10) to carry out a method according to any one of claims 1-9

12. A computer-readable data carrier has stored thereon a computer program product according to claim 11.

13. A system (S) for editing large language models and multimodal AI models and the system (S) includes at least one computer including at least one memory medium (11) that stores the data and/or dataset of the model (M), at least one control unit (10) that configured to processing the data within modules and according to requests and pre-defined configuration parameters from at least one user and/or client which communicates with the system (S) with at least one communication unit (12) to provide at least one output based on an input data and also establishing communication between the computers within the system (S); and the system (S) comprises;
at least one compression module (20), at least one lobotomization module (30) and at least one inception module (40) and at least one of the modules (20, 30, 40) configured to identifying layers (M1) of the trained model (M) with the weight matrices; and decomposing the weight matrices of the trained model (M) into a tensor network structure; and
the compression module (20) configured to compress the size of the pre-trained layers (M1) of the tensorized model (TN-M) with compressing the decomposed weight matrices; and storing the tensor network structure in the memory medium (11); and the lobotomization module (30) configured to injecting information to the trained model (M) with encoding data values of the dataset in one or more tensors of the trained model (M) associated with values of the dataset; and
at least one inception module (40) configured to removing information to the trained model with encoding zero data values of the dataset or removing the one or more tensor associated with values of the dataset to provide removing data that defined by user and/or client from the trained model (M); and
at least one integrity detection module (50) that has a baseline comparison and hashing unit (51) that configured to hashing the model (M) and re-hashing the model (M) periodically, and comparing the re-hashed value and first hashed value to tracking the modification status of the trained model (M); and
at least one integration module (70) that provides connection and data transfer between external systems and platforms (E) and the device (D).

14. The system (S) according to the claim 13 comprises, at least one classical computer that includes a processor that initialized the data and at least one quantum device that communicated the classical computer and includes at least one quantum processor as a computing unit (10).
